# EUROPEAN PATENT APPLICATION

(11) **EP 4 113 781 A1**
(43) Date of publication of application: **04.01.2023**
(21) Application number: 21814603.3
(22) Date of filing: 14.05.2021
(51) Int. Cl.: H02J 7/00

(54) **TERMINAL, TERMINAL CHARGING METHOD, ELECTRONIC DEVICE, AND STORAGE MEDIUM**

(30) Priority: 29.05.2020 CN 202010476603
(71) Applicant: ZTE Corporation, Shenzhen, Guangdong 518057 (CN)
(72) Inventor: XIAO, Jianhua, Shenzhen, Guangdong 518057 (CN)
(74) Representative: Canzler & Bergmeier Patentanwälte Partnerschaft mbB
(86) International application number: PCT/CN2021/093913
(87) International publication number: WO 2021/238683

(57) **Abstract**

A terminal (20) and a terminal charging method. The terminal (20) comprises a charging circuit (23), a branch selector switch (22), and a controller (21); the charging circuit (23) comprises a boost charging branch (231), a direct charging branch (232), and a buck charging branch (233), which are connected to one another in parallel; the branch selector switch (22) is respectively connected to the boost charging branch (231), the direct charging branch (232), and the buck charging branch (233); and the controller (21) is connected to the branch selector switch (22) for obtaining output capability parameters of an external charger and sending a switching signal to the branch selector switch (22) according to the output capability parameters, so as to enable the branch selector switch (22) to gate one of the boost charging branch (231), the direct charging branch (232), and the buck charging branch (233).

## Description

### CROSS-REFERENCE TO RELATED APPLICATION

This application is filed on the basis of Chinese patent application No. 202010476603.4 filed May 29, 2020, and claims priority of the Chinese patent application, the entire contents of which are incorporated herein by reference.

### TECHNICAL FIELD

The disclosure relates to the field of communications, and in particular, to a terminal, a terminal charging method, an electronic device, and a storage medium.

### BACKGROUND

With the increasing dependence of users on terminals such as mobile phones and tablet computers, in order to meet users' usage requirements, the quick charging technology came into being.

At present, the commonly-used scheme to realize quick charging in terminals is to keep a current constant and increase a charging voltage. In this high-voltage low-current charging mode, due to the increase of the charging voltage, the terminal needs to be connected to a matching charger to realize a charging function, which is incompatible with the widely available 5V-charger on the market.

### SUMMARY

The following is an overview of the subject matters described in detail herein. The overview is not intended to limit the protection scope of the claims.

According to some embodiments of the disclosure, a terminal, a terminal charging method, an electronic device, and a storage medium are provided.

In accordance with an aspect of the disclosure, an embodiment provides a terminal, including: a charging circuit including a boost charging branch, a direct charging branch, and a buck charging branch which are connected to one another in parallel; a branch selector switch respectively connected to the boost charging branch, the direct charging branch, and the buck charging branch; and a controller connected to the branch selector switch, configured to acquire an output capability parameter of an external charger and send a switching signal to the branch selector switch according to the output capability parameter, so as to enable the branch selector switch to switch on one of the boost charging branch, the direct charging branch, and the buck charging branch.

In accordance with another aspect of the disclosure, an embodiment provides a terminal charging method, including: acquiring an output capability parameter of an external charger; and sending a switching signal to a branch selector switch according to the output capability parameter, so as to enable the branch selector switch to switch on one of a boost charging branch, a direct charging branch, and a buck charging branch.

In accordance with another aspect of the disclosure, an embodiment provides an electronic device, including: a memory configured to store a program; and a processor configured to execute the program stored in the memory, where the program, when executed by the processor, causes the processor to perform the terminal charging method as described above.

In accordance with another aspect of the disclosure, an embodiment provides a storage medium storing computer-executable instructions which, when executed by a processor, cause the processor to perform the terminal charging method described above.

Other features and advantages of the disclosure will be set forth in part in the specification which follows and in part will become apparent from the specification or may be learned from practice of the disclosure. The objectives and other advantages of the disclosure may be realized and attained by the structure particularly pointed out in the specification, claims and the accompanying drawings.

### BRIEF DESCRIPTION OF DRAWINGS

The drawings are provided for a further understanding of the technical schemes of the disclosure, and constitute a part of the specification. The drawings and the embodiments of the disclosure are used to explain the technical schemes of the disclosure and do not limit the technical schemes of the disclosure.
FIG. 1 is a schematic structural diagram of a terminal according to an embodiment of the disclosure;
FIG. 2 is a schematic structural diagram of another terminal according to an embodiment of the disclosure;
FIG. 3 is a flowchart of a terminal charging method according to an embodiment of the disclosure;
FIG. 4 is a flowchart of step S100 in a terminal charging method according to an embodiment of the disclosure;
FIG. 5 is a flowchart of step S200 in a terminal charging method according to an embodiment of the disclosure; and
FIG. 6 is a structural diagram of an electronic device according to an embodiment of the disclosure.

### DETAILED DESCRIPTION

In order to make objectives, technical schemes and advantages of the disclosure clearer, the disclosure is described in further detail below with reference to the drawings and embodiments. It is to be understood that embodiments described herein are intended only to explain and not to limit the disclosure.

It is to be understood that, in the description of the embodiments of the disclosure, "multiple" means two or more, "greater than", "less than", "exceed", and the like are understood as not including the number, and "above", "below", "within", and the like are understood as including the number. The expressions "first", "second", and the like if described are only to distinguish between technical features, but cannot be used to indicate or imply relative importance or implicitly specify a quantity of indicated technical features or implicitly specify a sequential relationship of indicated technical features..

With the increasing dependence of users on terminals such as mobile phones and tablet computers, in order to meet users' usage requirements, the quick charging technology came into being.

At present, the commonly-used scheme to realize quick charging in terminals is to keep a current constant and increase a charging voltage. In this high-voltage low-current charging mode, due to the increase of the charging voltage, the terminal needs to be connected to a matching charger to realize a charging function, which is incompatible with the widely available 5V-charger on the market.

Based on the above, according to some embodiments of the disclosure, a terminal, a terminal charging method, an electronic device, and a storage medium are provided, which are compatible with a variety of chargers and can realize quick charging.

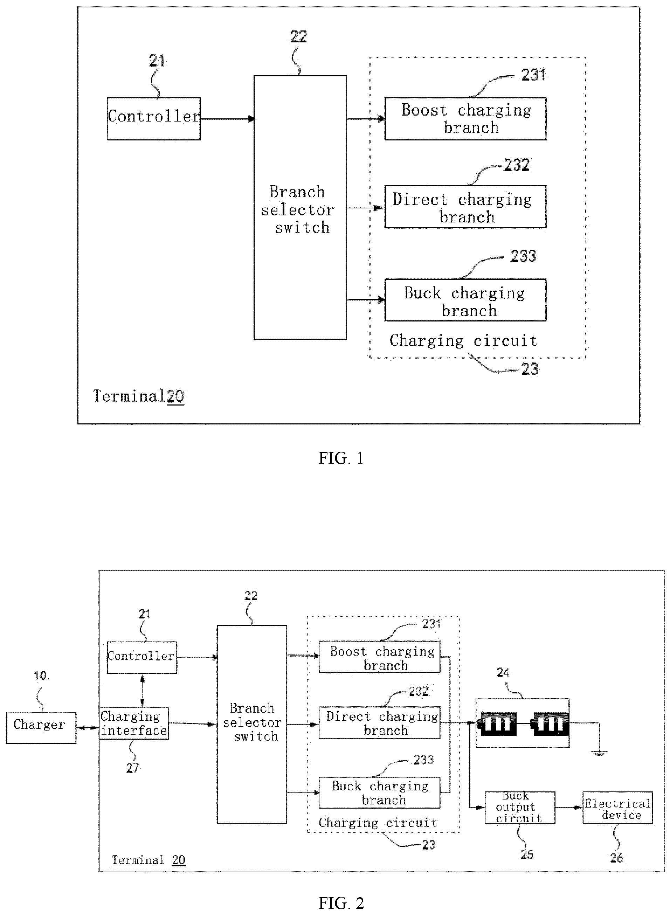

FIG. 1 is a schematic structural diagram of a terminal according to an embodiment of the disclosure. As shown in FIG. 1, the terminal 20 according to an embodiment of the disclosure includes a charging circuit 23, a branch selector switch 22, and a controller 21. The charging circuit 23 includes a boost charging branch 231, a direct charging branch 232, and a buck charging branch 233 which are connected to one another in parallel. The branch selector switch 22 is respectively connected to the boost charging branch 231, the direct charging branch 232, and the buck charging branch 233. The controller 21 is connected to the branch selector switch 22 and configured to acquire an output capability parameter of an external charger and send a switching signal to the branch selector switch according to the output capability parameter, so as to enable the branch selector switch 22 to switch on one of the boost charging branch 231, the direct charging branch 232, and the buck charging branch 233.

In some examples, the terminal 20 according to an embodiment of the disclosure includes a mobile phone, a tablet computer, a laptop computer, a portable power supply, a personal digital assistant, an on-board computer, a navigator and other devices.

In some examples, the branch selector switch 22 is configured to connect to a power supply outputted by a charger 10. It is to be understood that the charger may be a wired charger or a wireless charger. When a charging power supply outputted by the external charger 10 is inputted to an input terminal of the branch selector switch 22, the controller 21 acquires an output capability parameter of the charger 10 and sends a switching signal to the branch selector switch 22 according to the output capability parameter. The branch selector switch 22 switches on a corresponding branch of the charging circuit 23 in response to the switching signal from the controller 21, and the corresponding branch realizes a terminal charging function, so as to achieve a purpose of flexibly adjusting a charging strategy according to the output capability parameter of the charger 10, enabling the terminal to be compatible with the charger 10 with different output capability parameters.

It is to be understood that the output capability parameter may include an output voltage parameter of the charger 10. For example, if the output voltage parameter of the charger 10 is 5 V, the output capability parameter of the charger 10 is 5 V. If the output voltage parameter of the charger 10 includes multiple voltages, for example, the output voltage parameter includes 5 V, 9 V, and 12 V, the maximum voltage parameter 12 V that can be outputted by the charger 10 represents the output capability parameter of the charger. In some examples, the output capability parameter may also include an output current parameter or an output power parameter of the charger 10, and the output voltage parameter of the charger 10 can also be obtained according to the output current parameter or the output power parameter. Such parameters are not excessively limited in the embodiments of the disclosure.

In some embodiments, the terminal further includes a charging interface 27. The charging interface 27 is generally provided on a surface of the terminal and configured to be externally connected to the charger 10. As shown in FIG. 2, the charging interface 27 is connected to the input terminal of the branch selector switch 22. For example, the charging interface may be a Micro USB interface, a USB Type C interface, a Lightning interface, or the like.

In some embodiments, the controller 21 has an input terminal connected to the charging interface 27 to acquire the output capability parameter of the charger 10 externally connected to the charging interface 27 and send a corresponding switching signal to the branch selector switch 22 according to the output capability parameter.

In some embodiments, the terminal further includes a battery pack 24. An input terminal of the battery pack 24 is respectively connected to output terminals of the boost charging branch 231, the direct charging branch 232, and the buck charging branch 233, and the branch switched on by the branch selector switch 22 charges the battery pack 24.

In some examples, as shown in FIG. 2, the battery pack 24 may include two batteries connected in series. In this example, in the terminal 20, two batteries connected in series are used to replace a single battery with equivalent total capacity. By the series connection, the charging voltage of the battery pack 24 can be doubled, and the charging rate can be doubled with the charging current maintained constant, which greatly shortens the charging time. The battery pack 24 may also include more than two batteries connected in series, which is not excessively limited in the embodiment of the disclosure.

In some examples, as shown in FIG. 2, the terminal 20 may further include a buck output circuit 25. The buck output circuit 25 is connected to the battery pack 24 and configured to buck a voltage outputted by the battery pack 24 and then output the voltage to an electrical device 26, which prevents damage to the electrical device 26 caused by an excessively high voltage outputted by the battery pack 24, thereby having a function of overvoltage protection. In some examples, the buck output circuit 25 may include a half-voltage charging integrated circuit (IC). The half-voltage charging IC halves the voltage outputted by the battery pack 24 and then outputs the voltage to the electrical device 26 of the terminal 20.

In some examples, the buck charging branch 23 according to an embodiment of the disclosure may include a half-voltage charging IC. For example, the half-voltage charging IC halves a charging voltage outputted by the charger 10 and then outputs the voltage to the battery pack 24.

In some examples, the branch selector switch may realize switching of a charging branch through a relay or through a switch device such as a field effect transistor. The specific form of the branch selector switch 22 is not excessively limited in the embodiment of the disclosure.

A charging principle of the terminal 20 according to an embodiment of the disclosure is illustrated below.

The example battery pack 24 of the terminal 20 herein includes two 4.5 V batteries connected in series. In this example, the charging voltage of the battery pack 24 is 9 V. According to the charging voltage of the battery pack, a first interval may be preset as (0 V, 9 V), a second interval may be preset as [9 V, 18 V], and a third interval may be preset as (18 V, +∞), and then the branch charging the battery pack 24 is determined according to the output voltage parameter of the charger 10 and the interval where the output voltage parameter is located.

In one example, an output parameter of the charger 10 externally connected to the charging interface 27 is 5V/2A. Since the output voltage parameter of the charger 10 is within the first interval, the branch selector switch 22 switches on the boost charging branch 231 and switches off the direct charging branch 232 and the buck charging branch 233 to cause a voltage outputted by the charger 10 to enter the boost charging branch 231. The boost charging branch 231 boosts the voltage outputted by the charger 10, for example, boosts the voltage to 10 V. In this way, the charging circuit 23 charges the battery pack 24 with a charging voltage of 10 V and a charging current of 1 A.

In another example, an output parameter of the charger 10 externally connected to the charging interface 27 is 10V/5A. Since the output voltage parameter of the charger 10 is within the second interval, the branch selector switch 22 switches on the direct charging branch 232 and switches off the boost charging branch 231 and the buck charging branch 233 to cause a voltage outputted by the charger 10 to enter the direct charging branch 232. In this way, the charging circuit 23 maintains a charging voltage of 10 V and a charging current of 5 A to charge the battery pack 24, realizing 50 W high-power quick charging.

In another example, an output parameter of the charger 10 externally connected to the charging interface 27 is 20V/5A. Since the output voltage parameter of the charger 10 is within the third interval, the branch selector switch 22 switches on the buck charging branch 233 and switches off the direct charging branch 232 and the boost charging branch 231 to cause a voltage outputted by the charger 10 to enter the buck charging branch 233. The buck charging branch 233 bucks the voltage outputted by the charger 10, for example, bucks the voltage to 10 V. In this way, the charging circuit 23 maintains a charging voltage of 10 V and a charging current of 10 A to charge the battery pack 24, realizing 100 W super-power quick charging. In this example, the voltage outputted by the charger 10 is bucked and then outputted to the battery pack 24, so that the charging voltage and the charging current of the battery can be balanced, so as to prevent excessive power loss due to serious heating of the battery pack 24 caused by a high voltage and achieve high-voltage and high-current charging, thereby achieving the purpose of super-power charging.

For the terminal 20 according to an embodiment of the disclosure, a branch matching the output capability parameter of the charger 10 is switched on by the branch selector switch 22 to charge the terminal, so as to achieve a purpose of flexibly adjusting a charging strategy according to the output capability parameter of the charger 10, enabling the terminal to be compatible with the charger 10 with different output capability parameters. In addition, a high-power charging voltage can be adjusted by the buck charging branch to balance the charging voltage and the charging current and achieve high-voltage high-current charging, thereby achieving the purpose of super-power charging.

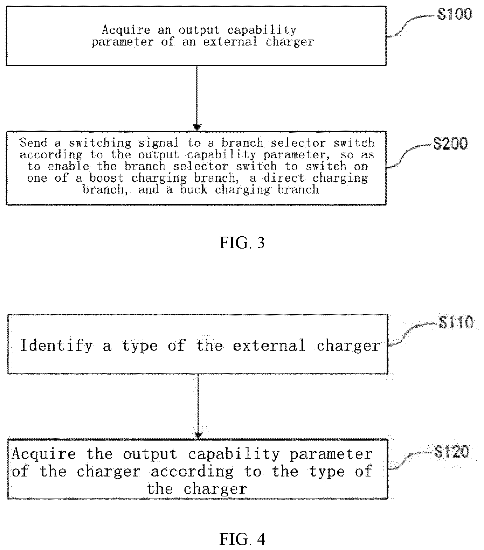

FIG. 3 is a flowchart of a terminal charging method according to an embodiment of the disclosure. The charging method may be applied to the terminal 20 as shown in FIG. 1 and FIG. 2, and is performed by the controller 21 in FIG. 1 and FIG. 2. As shown in FIG. 3, the terminal charging method includes following steps S100 and S200.

At S100, an output capability parameter of an external charger is acquired.

In an embodiment of the disclosure, the charging strategy is flexibly adjusted according to the output capability parameter of the external charger, and a charging function of the terminal is realized by switching on the charging branch corresponding to the output capability parameter, so as to enable the terminal to be compatible with the charger with different output capability parameters.

In an example, as shown in FIG. 4, step S100 may include following steps S110 and S 120.

At S110, a type of the external charger is identified.

At present, common types of chargers include: ordinary 5 V charger, Quick Charge (QC) 2.0 charger, QC3.0 charger, USB Power Delivery (USB PD) charger, and the like.

In an example, the type of the external charger may be identified through following steps.

At S111, a high level is continuously applied to a D+ pin of a USB interface of the charger, and it is detected whether the D- pin of the interface of the charger changes from a high level to a low level after a preset interval. If so, step S112 is performed, otherwise, step S113 is performed.

At S112, a high-level pulse signal is continuously applied to the D+ pin of the USB interface of the charger, and it is detected whether an output voltage of the charger changes after a preset interval. If so, the charger is a QC3.0 charger, otherwise, the charger is a QC2.0 charger.

At S113, the terminal communicates with the charger through a handshake protocol. If a communication connection is successfully established, the charger is a USB PD charger, otherwise, the charger is an ordinary 5 V charger.

It is to be noted that the method for identifying the type of the charger is known to those having ordinary skills in the art. Therefore, the principle is not described in detail herein.

According to an embodiment of the disclosure, by identifying the type of the charger connected to the charging interface, a corresponding acquisition strategy is selected according to the type of the charger, and capability of the charger is acquired according to the acquisition strategy corresponding to the type of the charger.

At S120, the output capability parameter of the charger is acquired according to the type of the charger.

The specific implementation for step S120 is illustrated below.

The output voltage of a QC3.0 charger may be increased by 200 mV each time a high-level signal is received. Therefore, when the type of the charger is the QC3.0 charger, a high-level pulse signal may be continuously applied to the D+ pin of the USB interface of the charger, and a magnitude of the voltage outputted by the charger may be detected. When the magnitude of the voltage outputted by the charger is no longer increased, the voltage outputted by the charger represents a maximum voltage that can be outputted by the charger, and the maximum voltage can be used as an output capability parameter of the QC3.0 charger.

The QC2.0 charger provides multiple fixed charging voltages, such as 5V/9V/12V or 5V/9V/12V/20V, depending on a voltage state of the D+ pin and the D- pin of the USB interface. Therefore, when the type of the charger is the QC2.0 charger, by applying a requested voltage to the D+ pin and the D- pin of the charging interface, a magnitude of the voltage outputted by the charger can be detected, a maximum voltage that can be outputted by the charger can be determined, and the maximum voltage can be used as an output capability parameter of the charger. For example, a requested voltage of 3.3V is applied to the D+ pin and the D- pin. If it is detected that the charger outputs a voltage of 20V, a maximum voltage that can be outputted by the charger is 20V. If it is not detected that the charger outputs a voltage of 20V, the maximum voltage that can be outputted by the charger is 12V. In this way, the output capability parameter of the QC2.0 charger is determined.

For the USB PD charger, the terminal may communicate with the USB PD charger through a handshake protocol and query the USB PD charger for output parameters, so as to further obtain the output capability parameter according to the output parameters obtained by query.

For the ordinary 5V charger, a 5V voltage fixedly outputted thereby is used as the output capability parameter.

It is to be understood that the above are only output capability parameter acquisition strategies listed for several common charger types. For more charger types, those having ordinary skill in the art can adjust the method for identifying the type of the charger and set a corresponding strategy for acquiring an output capability parameter as required, which is not excessively limited in the embodiment of the disclosure.

At S200, a switching signal is sent to a branch selector switch according to the output capability parameter, so as to enable the branch selector switch to switch on one of a boost charging branch, a direct charging branch, and a buck charging branch.

In an embodiment of the disclosure, a corresponding charging strategy is determined according to the output capability parameter obtained at step S100, so as to switch on one of the boost charging branch, the direct charging branch, and the buck charging branch to realize a terminal charging function.

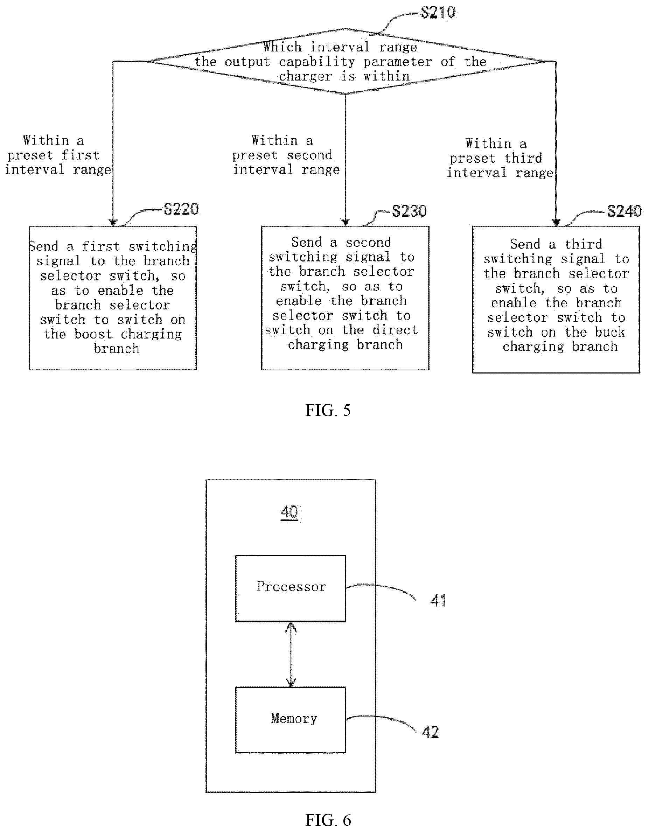

In an embodiment, as shown in FIG. 5, step S200 may include following steps S210 to S240.

At S210, it is judged which interval range the output capability parameter of the charger is within, if the output capability parameter of the charger is within a preset first interval range, step S220 is performed, if the output capability parameter of the charger is within a preset second interval range, step S230 is performed, and if the output capability parameter of the charger is within a preset third interval range, step S240 is performed.

At S220, a first switching signal is sent to the branch selector switch, so as to enable the branch selector switch to switch on the boost charging branch.

At S230, a second switching signal is sent to the branch selector switch, so as to enable the branch selector switch to switch on the direct charging branch.

At S240, a third switching signal is sent to the branch selector switch, so as to enable the branch selector switch to switch on the buck charging branch.

In an embodiment of the disclosure, according to the interval where the output capability parameter of the charger is located, a branch corresponding to the interval is switched on to realize the terminal charging function. Specific implementation principles of step S210 to S240 here may be obtained with reference to the foregoing example description about the charging principle of the terminal. Details are not repeated herein.

With the terminal charging method according to an embodiment of the disclosure, the charging strategy is flexibly adjusted according to the output capability parameter of the charger connected to the charging interface, so as to enable the terminal to be compatible with chargers with different output capacity parameters. In addition, a voltage outputted by a high-power charger can be adjusted by the buck charging branch to balance the charging voltage and the charging current of the battery and achieve high-voltage and high-current charging, thereby achieving the purpose of super-power charging.

FIG. 6 illustrates an electronic device 40 according to an embodiment of the disclosure. As shown in FIG. 6, the electronic device 40 includes, but is not limited to:
a memory 42 configured to store a program; and
a processor 41 configured to execute the program stored in the memory 42, where when the processor 41 executes the program stored in the memory 42, the processor 41 is configured to perform the terminal charging method described above.

The processor 41 and the memory 42 may be connected by a bus or in other manners.

As a non-transitory computer-readable storage medium, the memory 42 may be configured to store non-transitory software programs and non-transitory computer-executable programs, such as the terminal charging method according to an embodiment of the disclosure. By running the non-transitory software programs and instructions stored in the memory 42, the processor 41 implements the terminal charging method described above.

The memory 42 may include a program storage area and a data storage area. The program storage area may store an operating system and an application required by at least one function. The data storage area may store instructions for executing the terminal charging method described above. In addition, the memory 42 may include a high-speed random access memory, and may also include a non-transitory memory such as at least one disk storage device, a flash memory, or another non-transitory solid-state storage device. In some embodiments, the memory 42 includes memories remotely disposed relative to the processor 41. Such remote memories may be connected to the processor 41 over a network. Examples of the network include, but are not limited to, the Internet, corporate intranets, local area networks, mobile communication networks, and combinations thereof.

The non-transitory software programs and instructions required to realize the terminal charging method described above are stored in the memory 42, which, when executed by one or more processors 41, cause the one or more processors to perform the terminal charging method described above, for example, perform steps S 100 to S200 of the method described in FIG. 3, steps S110 to S120 of the method described in FIG. 4, and steps S210 to S240 of the method described in FIG. 5.

According to some embodiments of the disclosure, a storage medium is further provided, storing computer-executable instructions for performing the terminal charging method described above.

In an embodiment, the storage medium stores computer-executable instructions. The computer-executable instructions are executed by one or more control processors 41, for example, executed by one processor 41 in the electronic device 40, to enable the one or more processors 41 to perform the terminal charging method described above, for example, steps S100 to S200 of the method described in FIG. 3, steps S110 to S120 of the method described in FIG. 4, and steps S210 to S240 of the method described in FIG. 5.

In the embodiment of the disclosure, the terminal includes a charging circuit, a branch selector switch, and a controller. The charging circuit includes a boost charging branch, a direct charging branch, and a buck charging branch which are connected to one another in parallel. The branch selector switch is respectively connected to the boost charging branch, the direct charging branch, and the buck charging branch. The controller is connected to the branch selector switch, and configured to acquire an output capability parameter of an external charger and send a switching signal to the branch selector switch according to the output capability parameter, so as to enable the branch selector switch to switch on one of the boost charging branch, the direct charging branch, and the buck charging branch. Based on the embodiments of the disclosure, a branch matching the output capability parameter of the charger is switched on by the branch selector switch to charge the terminal, so as to achieve a purpose of flexibly adjusting a charging strategy according to the output capability parameter of the charger, enabling the terminal to be compatible with chargers with different output capability parameters. In addition, a high-power charging voltage can be adjusted by the buck charging branch to balance the charging voltage and the charging current and achieve high-voltage and high-current charging, thereby achieving the purpose of super-power charging.

The embodiments described above are only illustrative. The units described as separate parts may or may not be physically separate, that is, may be located in one place, or may be distributed over multiple network units. Some or all of the modules may be selected according to actual needs to achieve the objectives of the schemes of the embodiments.

Those of ordinary skill in the art may understand that all or some of the steps in the method and the system disclosed above may be implemented as software, firmware, hardware and appropriate combinations thereof. Some or all of the physical components may be implemented as software executed by a processor such as a central processing unit, a digital signal processor or a microprocessor, or may be implemented as hardware, or may be implemented as an integrated circuit such as an application-specific integrated circuit. Such software may be distributed on a computer-readable medium, which may include a computer storage medium (or non-transitory medium) and a communication medium (or a transitory medium). As is well known to those of ordinary skill in the art, the term "computer storage medium" includes volatile and nonvolatile, removable and non-removable media implemented in any method or technology for storing information (such as computer-readable instructions, data structures, program modules, or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disk (DVD) or other optical storage, magnetic cassette, magnetic tape, magnetic disk storage or other magnetic storage apparatuses, or any other media that can be configured for storing desired information and can be accessed by a computer. Besides, as is well known to those of ordinary skill in the art, the communication medium typically includes computer-readable instructions, data structures, program modules or other data in a modulated data signal such as a carrier wave or other transport mechanisms, and may include any information delivery medium.

The above is a detailed description of some implementations of the disclosure, but the disclosure is not limited to the above implementations. Those of ordinary skills in the art may also make various equivalent transformations or replacements without departing from the gist of the disclosure, which are included in the scope defined by the claims of the disclosure.

## Claims

1. A terminal, comprising:
a charging circuit comprising a boost charging branch, a direct charging branch, and a buck charging branch which are connected to one another in parallel;
a branch selector switch respectively connected to the boost charging branch, the direct charging branch, and the buck charging branch; and
a controller connected to the branch selector switch, configured to acquire an output capability parameter of an external charger and send a switching signal to the branch selector switch according to the output capability parameter, so as to enable the branch selector switch to switch on one of the boost charging branch, the direct charging branch, and the buck charging branch.

2. The terminal of claim 1, further comprising:
a battery pack respectively connected to the boost charging branch, the direct charging branch, and the buck charging branch.

3. The terminal of claim 2, wherein the battery pack comprises at least two batteries connected in series.

4. The terminal of claim 2, further comprising:
a buck output circuit connected to the battery pack and configured to buck a voltage outputted by the battery pack and then output the voltage to an electrical device.

5. The terminal of claim 1, further comprising:
a charging interface connected to the branch selector switch and configured to be externally connected to the charger.

6. The terminal of claim 1, wherein acquiring, by the controller, an output capability parameter of an external charger comprises:
identifying a type of the external charger; and
acquiring the output capability parameter of the charger according to the type of the charger.

7. The terminal of claim 1, wherein sending, by the controller, a switching signal to the branch selector switch according to the output capability parameter, so as to enable the branch selector switch to switch on one of the boost charging branch, the direct charging branch, and the buck charging branch comprises one of:
in response to that the output capability parameter of the charger is within a preset first interval range, sending a first switching signal to the branch selector switch, so as to enable the branch selector switch to switch on the boost charging branch;
in response to that the output capability parameter of the charger is within a preset second interval range, sending a second switching signal to the branch selector switch, so as to enable the branch selector switch to switch on the direct charging branch; and
in response to that the output capability parameter of the charger is within a preset third interval range, sending a third switching signal to the branch selector switch, so as to enable the branch selector switch to switch on the buck charging branch.

8. A terminal charging method, comprising:
acquiring an output capability parameter of an external charger; and
sending a switching signal to a branch selector switch according to the output capability parameter, so as to enable the branch selector switch to switch on one of a boost charging branch, a direct charging branch, and a buck charging branch.

9. The terminal charging method of claim 8, wherein acquiring an output capability parameter of an external charger comprises:
identifying a type of the external charger; and
acquiring the output capability parameter of the charger according to the type of the charger.

10. The terminal charging method of claim 8, wherein sending a switching signal to a branch selector switch according to the output capability parameter, so as to enable the branch selector switch to switch on one of a boost charging branch, a direct charging branch, and a buck charging branch comprises one of:
in response to that the output capability parameter of the charger is within a preset first interval range, sending a first switching signal to the branch selector switch, so as to enable the branch selector switch to switch on the boost charging branch;
in response to that the output capability parameter of the charger is within a preset second interval range, sending a second switching signal to the branch selector switch, so as to enable the branch selector switch to switch on the direct charging branch; and
in response to that the output capability parameter of the charger is within a preset third interval range, sending a third switching signal to the branch selector switch, so as to enable the branch selector switch to switch on the buck charging branch.

11. An electronic device, comprising:
a memory configured to store a program; and
a processor configured to execute the program stored in the memory,
wherein the program, when executed by the processor, causes the processor to perform the method of any one of claims 8 to 10.

12. A storage medium, storing computer-executable instructions which, when executed by a processor, cause the processor to perform the method of any one of claims 8 to 10.
